# EUROPÄISCHE PATENTSCHRIFT

(11) **EP 2 095 179 B1**
(45) Veröffentlichungstag und Bekanntmachung des Hinweises auf die Patenterteilung: **07.11.2018**
(21) Anmeldenummer: 07802983.2
(22) Anmeldetag: 29.08.2007
(51) Int. Cl.: G02F 1/11

(54) **AKUSTOOPTISCHES BAUTEIL**
ACOUSTO-OPTICAL COMPONENT
ELÉMENT DE CONSTRUCTION ACOUSTO-OPTIQUE

(30) Priorität: 09.11.2006 DE 102006053187
(43) Veröffentlichungstag der Anmeldung: 02.09.2009
(73) Patentinhaber: Leica Microsystems CMS GmbH, 35578 Wetzlar (DE)
(72) Erfinder: SEYFRIED, Volker, 69226 Nussloch (DE)
(74) Vertreter: Hassenbürger, Anneliese
(86) Internationale Anmeldenummer: PCT/EP2007/058966
(87) Internationale Veröffentlichungsnummer: WO 2008/055721

(56) Entgegenhaltungen:
- EP-A- 1 500 966
- WO-A-85/01591
- WO-A-97/30371
- US-A- 3 729 251
- CHANG I; KATZKA P; JACOB J; ESTRIN S: "Programmable acousto-optic filter" 1979 ULTRASONICS SYMPOSIUM PROCEEDINGS 26-28 SEPT. 1979 NEW ORLEANS, LA, USA, 1979, Seiten 40-45, XP008086868 IEEE New York, NY, USA

## Beschreibung

Die Erfindung betrifft ein akustooptisches Bauteil, insbesondere zum Einsatz im Strahlengang einer optischen Anordnung, vorzugsweise eines Mikroskops, mit einem Kristall zum Durchtritt von Licht, wobei über einen elektrischen Wandler Schallwellen erzeugt und durch den Kristall hindurch geleitet werden und wobei die den Kristall durchlaufenden Schallwellen die optischen Eigenschaften des Kristalls und somit das durch den Kristall hindurch tretende Licht beeinflussen.

Die vorliegende Erfindung bezieht sich ganz allgemein auf ein akustooptisches Bauteil, d.h. auf ein Bauteil, durch welches Lichtstrahlen in Abhängigkeit von akustischen Gegebenheiten manipulierbar sind.

Akustooptische Bauteile bzw. Elemente sind in den unterschiedlichsten Ausführungsformen aus der Praxis bekannt. Dazu sei beispielsweise auf ganz besondere akustooptische Elemente wie den AOM (acousto optical modulator), AOD (acousto optical deflector), AOTF (acousto optical tunable filter), Frequenzschieber (frequency shifter) o.ä. verwiesen. Für diesbezügliche Ausführungen finden sich umfassend wissenschaftliche Literaturstellen, beispielsweise "Acousto-Optics" von Adrian Korpel, New York 1997, "Acousto-Optic Devices" von Jieping Xu und Robert Stroud, New York 1992 und "Design and Fabrication of Acousto-Optic Devices" von Akis P. Goutzoulis und Dennis R. Pape, New York 1994.

An dieser Stelle sei darauf hingewiesen, dass es in Bezug auf optoakustische Bauteile unterschiedlichste Begriffe, Hinweise auf Funktionsweisen und Eigenschaften gibt. Insoweit erscheint es im Vorfeld einer Erörterung der Erfindung erforderlich, Allgemeines zu den optischen Bauteilen auszuführen.

Akustooptische Bauteile bestehen in der Regel aus einem sogenannten akustooptischen Kristall, an dem ein elektrischer Wandler (in der Literatur oft als Transducer bezeichnet) angebracht ist. Üblicherweise umfasst der Wandler ein piezoelektrisches Material sowie eine darüber liegende und eine darunter liegende Elektrode. Durch elektrisches Beschalten der Elektroden mit Radiofrequenzen, die typischer Weise im Bereich zwischen 30 mHz und 800 mHz liegen, wird das piezoelektrische Material zum Schwingen gebracht, so dass eine akustische Welle, d.h. eine Schallwelle, entstehen kann, die nach ihrer Entstehung den Kristall durchläuft. Meist wird die akustische Welle nach dem Durchlaufen eines optischen Wechselwirkungsgebiets an der gegenüberliegenden Kristallseite absorbiert oder wegreflektiert.

Akustooptische Kristalle zeichnen sich dadurch aus, dass die entstehende Schallwelle die optischen Eigenschaften des Kristalls verändert, wobei durch den Schall eine Art optisches Gitter oder eine vergleichbare optisch aktive Struktur, beispielsweise ein Hologramm, induziert wird. Durch den Kristall tretendes Licht erfährt an dem optischen Gitter eine Beugung. Entsprechend wird das Licht in verschiedenen Beugungsordnungen in Beugungsrichtungen gelenkt.

Es gibt akustooptische Bauteile, die das gesamte einfallende Licht mehr oder weniger unabhängig von der Wellenlänge beeinflussen. Dazu sei lediglich beispielhaft auf die zuvor genannten Bauteile AOM, AOD und Frequenzschieber verwiesen. Außerdem gibt es auch bereits Bauteile, die beispielsweise abhängig von den eingestrahlten Radiofrequenzen selektiv auf einzelne Wellenlängen wirken (AOTFs). Häufig bestehen die akustooptischen Elemente aus doppelbrechenden Kristallen, wie beispielsweise Tellurdioxid, wobei u.a. die Lage der Kristallachse relativ zur Einfallebene des Lichts und seiner Polarisation die optischen Eigenschaften des jeweiligen Elements bestimmt.

In der Anwendung werden wahlweise das durch die Beugung unbeeinflusste Licht (0. Ordnung), das in verschiedene Beugungsordnungen abgelenkte Licht oder beide Lichtarten verwendet.

Bei einem konventionellen akustooptischen Bauteil, wie es aus der Praxis bekannt ist, wird die Radiofrequenz durch ein Koaxialkabel dem akustooptischen Bauteil zugeführt. Dort erfolgt auf einer Elektronikplatine eine Impedanzanpassung, damit es zu keinen Radiofrequenz-Reflexionen kommt und damit ein möglichst hoher Anteil der Radio-Frequenz-Leistung am Kristall ankommt, der eine andere Impedanz als das Radiofrequenz-Kabel hat. Von der Elektronikplatine aus wird die Radiofrequenz zum Wandler (Transducer) auf dem Kristall weitergeleitet, wo die akustische Welle erzeugt wird.

Bei dem gattungsbildenden akustischen Bauteil ist wesentlich, dass verschiedene Schichten auf der Kristalloberfläche aufgebracht sind. Die unterste auf dem Kristall aufgebrachte Schicht besteht aus Metall, die als negative Elektrode dient. Sie wird üblicherweise über die Elektronikplatine mit dem Außenleiter eines die Radiofrequenz transportierenden Koaxialkabels verbunden. Auf der untersten Metallschicht folgt eine Lage aus piezoelektrischem Material. Dabei handelt es sich üblicherweise um Lithiumniobat. Der Lage aus piezoelektrischem Material folgt eine zweite metallische Elektrode, die üblicher Weise mit dem Innenleiter des Koaxialkabels verbunden ist. Beim Einspeisen der Radiofrequenz auf die beiden Elektroden entsteht ein elektrisches Wechselfeld zwischen den beiden Elektroden, welches das dazwischen liegende Piezoelement zum Schwingen bringt, so dass sich von hier aus eine akustische Welle im Innern des Kristalls ausbreiten kann. Die akustische Welle wird üblicher Weise von der gegenüberliegenden Kristallseite weg reflektiert. Durch Aufrauhen der gegenüberliegenden Kristallseite lässt sich ein großer Anteil der Schallwelle absorbieren, so dass es zu möglichst wenigen Reflexionen zurück ins akustooptische Wechselwirkungsgebiet im Kristall kommt.

Insbesondere dann, wenn der Wandler groß ist, ist die Kapazität des aus den beiden Elektroden gebildeten Kondensators viel zu hoch, um eine brauchbare Impedanzanpassung zwischen dem Radiofrequenz-Kabel und dem akustooptischen Kristall zu realisieren. In dieser Situation behilft man sich mit einem Trick, wonach der Wandler in zwei Teile aufgespalten wird, wobei die beiden Teile in Reihe geschaltet sind. Dazu ist es notwendig, das Piezomaterial in beiden Teilen unterschiedlich zu polen, damit die beiden Wandlerhälften nicht gegeneinander arbeiten. In einem solchen Falle ist der Innenleiter des Koaxialkabels mit der positiven Elektrode verbunden. Der Außenleiter des Koaxialkabels ist mit der negativen Elektrode verbunden, die auf der anderen Seite des Piezomaterials liegt. Der Wandler stellt eine Kapazität dar, an die das elektrische Wechselfeld angelegt wird.

Im Falle eines aufgespaltenen Wandlers ist der Innenleiter des Koaxialkabels mit der positiven Elektrode verbunden, die jedoch allenfalls die Hälfte der Wandler-Forderseite umfasst. Die zugehörige Gegenelektrode stellt gleichzeitig auch die Gegenelektrode zur negativen Elektrode dar, die die andere Hälfte der Wandlervorderseite umfasst. In einem solchen Falle liegen die Kapazitäten zweier in Reihe geschalteter Kapazitäten vor. Folglich erreicht man durch das Aufspalten des Wandlers in zwei Teile eine Reduktion der Kapazität auf ein Viertel, wobei jedoch die Größe der das Schallfeld erzeugenden Fläche erhalten bleibt. Dabei ist zu beachten dass die Piezoschichten der beiden Wandlerhälften umgekehrt zu polen sind, da diese sonst gegeneinander arbeiten und das entstehende Schallfeld dann nicht dem des nicht aufgespaltenen Wandlers entspricht.

Die Ausführung des Wandlers, insbesondere seine Größe und Form, ist bestimmend dafür, wie das akustische Feld im Innern des Kristalls aussieht. Daraus resultieren die optischen Eigenschaften des beschalteten Kristalls.

Bei akustooptisch durchstimmbaren Filtern (AOTF) ist der spektrale Verlauf des abgelenkten Lichts im Wesentlichen durch die Fouriertransformierte der Wandlerform bestimmt. Dies bedeutet, dass breite Wandler eine schärfere spektrale Transmissionsfunktion besitzen als schmale Wandler. Folglich schneidet ein AOTF mit breitem Wandler aus dem einfallenden Licht einen spektral engeren Bereich als ein AOTF mit schmalerem Wandler aus. Der AOTF mit breitem Wandler besitzt somit eine höhere spektrale Auflösung. Im umgekehrten Falle hat ein AOTF mit schmalerem Wandler eine höhere spektrale Bandbreite und lenkt dabei mehr spektrale Anteile des einfallenden Lichts ab.

Während in der Vergangenheit akustooptische Bauteile der gattungsbildenden Art, vor allem AOTFs, üblicher Weise dazu eingesetzt wurden, Lichtintensitäten einzustellen und zu regeln, gibt es zwischenzeitlich eine immer stärker werdende Tendenz, wonach es erforderlich wird, solche akustooptischen Bauteile dazu zu verwenden, aus einem mehr oder weniger spektral breitbandigem Licht bestimmte Anteile auszuschneiden bzw. herauszufiltern. Dazu sei lediglich beispielhaft auf die DE 10115 488 A1 verwiesen.

Eine entsprechende Verwendung findet das akustooptische Bauteil vor allem beim Ausschneiden bestimmter spektraler Anteile einer kontinuierlichen oder breitbandigen Lichtquelle zu Beleuchtungszwecken (Weißlichtlaser, Breitbandlaser, Ultrakurzpulslaser, Superluminiszenz-LED oder andere Superluminiszenzlichtquellen, ASE-Lichtquellen, Glühbirnen, Point-Scource-LEDs und andere LEDS, Sonnen- oder Sternenlicht, o.ä.). Ein weiteres Anwendungsgebiet ist das Ausschneiden bestimmter spektraler Lichtanteile zu Detektionszwecken. Dazu sei lediglich beispielhaft auf herkömmliche programmierbare spektrale Filter verwiesen. Auch die Anwendung des akustooptischen Elements als Bauteil innerhalb eines programmierbaren Strahlteilers (AOBS) ist in diesem Zusammenhang von großer Bedeutung.

Allerdings sind mit den derzeit verfügbaren akustooptischen Bauteilen und insbesondere mit den AOTFs die optischen Eigenschaften des jeweiligen Bauteils unverändert festgelegt, nämlich aufgrund der Auswahl eines bestimmten Wandlerdesigns. Eine nachträgliche Änderung oder Anpassung der spektralen Bandbreite eines AOTFs ist bislang nicht möglich, wenngleich dies im Lichte der voranstehenden Ausführungen wünschenswert ist.

Die WO 97/30371 beschreibt ein Lichtmikroskop mit einem AOTF, dessen Wandler effektiv durch selektives Aktivieren von einzelnen Wandlersegmenten verändert werden kann, so dass sich die Übertragungsfunktion und dabei insbesondere die Durchlass-Bandbreite des AOTF beeinflussen lässt.

Der Artikel "Programmable Acousto-Optic Filter" von Chang et al., veröffentlicht in 1979 Ultrasonic Symposium Proceedings 26-28 Sept. 1979 New Orleans, LA, USA, 1979, Seiten 40-45, XP008086868, IEEE New York, NY, USA, beschreibt eine Möglichkeit zur Realisierung eines programmierbaren Bandpasses für einen AOTF. Dabei wird ein individuell ansteuerbares Wandler-Array genutzt, um an verschiedenen Orten verschiedene Intensitäten von akustischen Wellen in den Kristall des AOTF einzukoppeln, so dass sich die spektrale Bandbreite beispielsweise zwischen 40 Ä und 150 Ä einstellen lässt.

Der vorliegenden Erfindung liegt daher die Aufgabe zugrunde, ein akustooptisches Bauteil der gattungsbildenden Art derart auszugestalten und weiterzubilden, dass es sich zu unterschiedlichsten Zwecken variabel einsetzen lässt.

Die voranstehende Aufgabe ist erfindungsgemäß durch ein akustooptisches Bauteil mit den Merkmalen des Patentanspruchs 1 gelöst. Danach ist das gattungsbildende akustische Bauteil dadurch gekennzeichnet, dass zur variablen Beeinflussung des durch den Kristall hindurch tretenden Lichts die den Kristall durchlaufenden Schallwellen bzw. das akustische Feld im Kristall veränderbar sind/ist.

Erfindungsgemäß ist erkannt worden, dass es grundsätzlich möglich ist, akustooptische Bauteile mit einstellbaren Eigenschaften zur Verfügung zu stellen. Die Flexibilität des akustooptischen Bauteils ergibt sich dadurch, dass das durch den Kristall hindurch tretende Licht variabel beeinflusst wird, nämlich dadurch, dass die den Kristall durchlaufenden Schallwellen bzw. das dadurch definierte akustische Feld im Kristall verändert wird. So lässt sich beispielsweise die Bandbreite der AOTFs in der Konfokalmikroskopie variabel einstellen, so dass im Zusammenhang mit kontinuierlichen Lichtquellen, beispielsweise einem Weißlichtlaser, die spektrale Schärfe des Anregungslichts sowie die Intensität individuell und dabei äußerst schnell einstellbar sind.

In vorteilhafter Weise erfolgt die Veränderung der Schallwellen bzw. des akustischen Feldes im Kristall durch Ansteuern und/oder Beschalten des Wandlers. Über den Wandler werden die den Kristall durchlaufenden Schallwellen beeinflusst, so dass dadurch das durch den Kristall hindurch tretende Licht - über die Schallwellen - variabel beeinflussbar ist. Ein Mechanismus zur variablen Steuerung des akustooptischen Bauteils ist damit geschaffen.

Im Konkreten ist es denkbar, dass der Wandler aus mehreren einzelnen, voneinander unabhängigen Wandlersegmenten besteht. Diese Wandlersegmente können nebeneinander an, auf oder in dem Kristall angeordnet sein. Sie können gleiche Formen und/oder Größe, oder aber auch unterschiedliche Formen und/oder Größe haben.

Insbesondere zur Definition eines homogenen akustischen Feldes im Kristall ist es von Vorteil, wenn die Wandlersegmente in sich symmetrisch ausgebildet und ebenso symmetrisch zueinander angeordnet sind. Bei einem mittigen Segment könnten darumherum bzw. links und rechts davon symmetrisch angeordnete weitere Wandlersegmente vorgesehen sein.

Schaltungstechnisch ist es von Vorteil, wenn die Wandlersegmente einzeln oder in Gruppen schaltbar bzw. aktivierbar sind. In vorteilhafter Weise lassen sich die Wandlersegmente symmetrisch schalten, d.h. in symmetrischer Anordnung ein- und ausschalten. Ein paarweises Zuschalten oder Abschalten der Wandlersegmente ist in Bezug auf ein homogenes akustisches Feld im Kristall von Vorteil.

In Bezug auf die konkrete konstruktive Ausgestaltung des Wandlers sei darauf hingewiesen, dass dieser als unterste Schicht eine negative Elektrode, vorzugsweise aus Metall, aufweisen kann. Auf der untersten Schicht ist eine mittlere Schicht aus einem Piezomaterial ausgebildet. Bei dem Piezomaterial kann es sich beispielsweise um Lithiumniobat handeln. Auf der mittleren Schicht ist eine obere Schicht ausgebildet, die als negative Elektrode dient. Sie besteht vorzugsweise aus Metall.

In weiter vorteilhafter Weise ist die negative Elektrode mit dem anderen Leiter eines zweiadrigen Stromkabels verbunden. Bei den Kabeln kann es sich um ein Koaxialkabel handeln, wobei die negative Elektrode mit dem Außenleiter des Koaxialkabels und die positive Elektrode mit dem Innenleiter des Koaxialkabels verbunden sein kann.

Unter Bezugnahme auf die zuvor bereits erörterte Segmentierung des Wandlers ist es denkbar, dass die negative Elektrode und/oder die positive Elektrode und/oder das Piezomaterial zur Bildung der Wandlersegmente segmentiert ist/sind. Beispielsweise ist es denkbar, dass lediglich die Elektroden segmentiert sind und dass die mittlere Schicht aus Piezomaterial durchgängig ausgelegt ist.

Im Hinblick auf eine quasi monolithische Ausgestaltung des gesamten akustooptischen Bauteils ist es von Vorteil, wenn alle Bausteine auf einer Art Befestigungsplatte angeordnet sind. Im Konkreten ist der Kristall mit dem integralen Wandler auf einer Befestigungsplatte angeordnet. Der Kristall kann fest mit einer Elektronikplatine verbunden sein, die wiederum auf der Befestigungsplatte angeordnet ist. Ebenso ist es denkbar, dass die Elektronikplatine neben dem eigentlichen Wandler auf der Befestigungsplatte sitzt. Über die Elektronikplatine wird der Wandler bzw. werden die Wandlersegmente mit einer Radiofrequenz gespeist, wodurch dieser Schwingungen erzeugt, die zu Schallwellen führen, die letztendlich den Kristall durchlaufen.

Die jeweiligen Bausteine, d.h. die Wandlersegmente, sind mit der Elektronikplatine elektrisch verbunden. Die Verbindung wird üblicherweise durch Bonddrähte generiert, wobei die jeweiligen Elektroden des Wandlers mit der Elektronikplatine verbunden sind.

Die zur Beaufschlagung des Wandlers dienenden Radiofrequenzen werden über ein elektrisches Kabel, vorzugsweise über ein Koaxialkabel, von einem externen Generator der Elektronikplatine zugeführt. Dabei kann es sich um ein singuläres Koaxialkabel handeln, welches mit der Elektronikplatine verbunden ist. Ebenso ist es denkbar, dass die Elektronikplatine über zwei oder mehrere Kabel, vorzugsweise über Koaxialkabel, an einen Generator oder an unterschiedliche Generatoren für unterschiedliche oder gleiche Radiofrequenzen angeschlossen ist. So lässt sich die Elektronikplatine gleich mehrfach mit Radiofrequenzen unterschiedlicher Frequenzbereiche beaufschlagen.

In ganz besonders vorteilhafter Weise umfasst die Elektronikplatine elektronische Bausteine, wobei es sich dabei um aktive Bausteine handeln kann. Über diese Bausteine sind die Radiofrequenzen auf die einzelnen Wandlersegmente schaltbar, und zwar vorzugsweise unter Zugrundelegung eines entsprechenden Steuersignals. Das Steuersignal wird über ein separates Steuerkabel von einer externen Steuereinrichtung zur Verfügung gestellt. Die Signale, die über das Steuerkabel an die Elektronikplatine bzw. an die dortigen elektronischen Bausteine geleitet werden, dienen zur definierten Beschaltung der Wandlersegmente.

Über die elektronischen Bausteine erfolgt eine Anpassung der Leistung der Radiofrequenz, insbesondere in Bezug auf die jeweilige Form und Größe der einzelnen Wandlersegmente. So sorgt die Elektronikplatine für die Verteilung der Radiofrequenzen auf die verschiedenen Wandler bzw. Wandlersegmente und passt die entsprechende Leistung an die Form und Größe der einzelnen Wandlersegmente an. Die für das unterschiedliche Beschalten der einzelnen Wandlersegmente notwendigen Informationen werden über das Steuerkabel auf die Elektronikplatine übertragen, wobei es in diesem Zusammenhang von weiterem Vorteil ist, wenn die Elektronikplatine über eine eigene Stromversorgung verfügt. Die elektronischen Bausteine bilden insoweit eine aktive Elektronik und können einen Mikroprozessor umfassen oder bilden, der ebenfalls der Elektronikplatine zugeordnet ist.

Die Elektronikplatine schaltet somit je nach den Erfordernissen einzelne Wandlersegmente oder Gruppen davon an oder ab oder variiert die anliegende Leistung.

In weiter vorteilhafter Weise umfasst die Elektronikplatine einen lesbaren und gegebenenfalls beschreibbaren Datenspeicher, auf dem Informationen ablegbar sind, beispielsweise Informationen für die Beschaltung oder die Kalibrierung des akustooptischen Bauteils.

Bei dem akustooptischen Bauteil kann es sich beispielsweise um einen AOM (acousto optical modulator), einen AOD (acousto optical deflector) einen AOTF (acousto optical tunable filter) oder einen AOBS (acousto optical beam splitter) handeln. Beliebige sonstige Anwendungen sind denkbar, da es sich bei dem erfindungsgemäßen akustooptischen Bauteil um ein beliebiges Bauteil zur variablen Beeinflussung des durch das Bauteil hindurch tretenden Lichts handeln kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Ansicht ein herkömmliches akustooptisches Bauteil mit fest vorgegebenen Eigenschaften,
- Fig. 2: in einer schematischen Stirnansicht einen Kristall des Gegenstands aus Fig. 1 mit integriertem Wandler,
- Fig. 3: in einer schematischen Stirnansicht ein zweites Ausführungsbeispiel eines Kristalls des Gegenstands aus Fig. 1 mit integriertem aufgespaltenem Wandler,
- Fig. 4a bis 4d: in schematischen Darstellungen Schemenansichten und Ersatzschaubilder zu den Gegenständen aus den Fig. 2 und 3,
- Fig. 5: in einer schematischen Ansicht, entsprechend Fig. 1, ein Ausführungsbeispiel eines erfindungsgemäßen akustooptischen Bauteils mit segmentiertem Wandler,
- Fig. 6: in einer schematischen Ansicht, entsprechend Fig. 1, ein weiteres Ausführungsbeispiel eines erfindungsgemäßen akustooptischen Bauteils mit segmentiertem Wandler,
- Fig. 7: in einer schematischen Stirnansicht ein Ausführungsbeispiel des Kristalls nebst Wandler des Gegenstands aus den Fig. 5 oder 6,
- Fig. 8: in einer schematischen Stirnansicht ein weiteres Ausführungsbeispiel des Kristalls nebst Wandler des Gegenstands aus den Fig. 5 oder 6 und
- Fig. 9: in einer schematischen Ansicht den Einsatz erfindungsgemäßer akustooptischer Bauteile in einem konfokalen Laserscanmikroskop, nämlich in Form eines AOTF und AOBS.

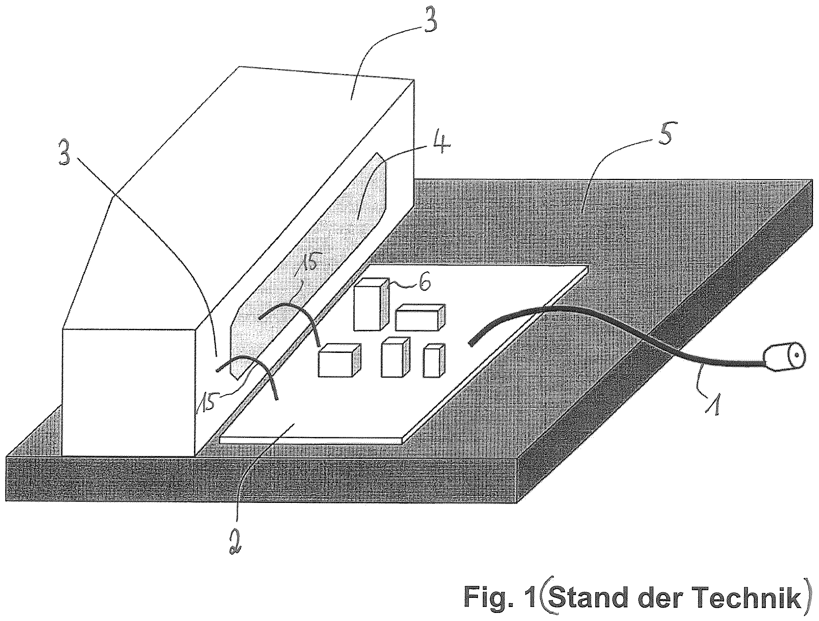

Fig. 1 zeigt einen typischen Aufbau eines akustooptischen Bauteils nach dem Stand der Technik. Die Radiofrequenz wird durch ein Koaxialkabel 1 dem akustooptischen Bauteil zugeführt. Dort erfolgt auf einer Elektronikplatine 2 eine Impedanzanpassung, damit es zu keinen RF-Reflexionen kommt und damit möglichst viel der RF-Leistung am Kristall 3 ankommt, der eine andere Impedanz als das RF-Kabel 1 hat. Von der Elektronikplatine 2 wird die Radiofrequenz zum Wandler 4 auf dem Kristall 3 weitergeleitet, wo die akustische Welle erzeugt wird.

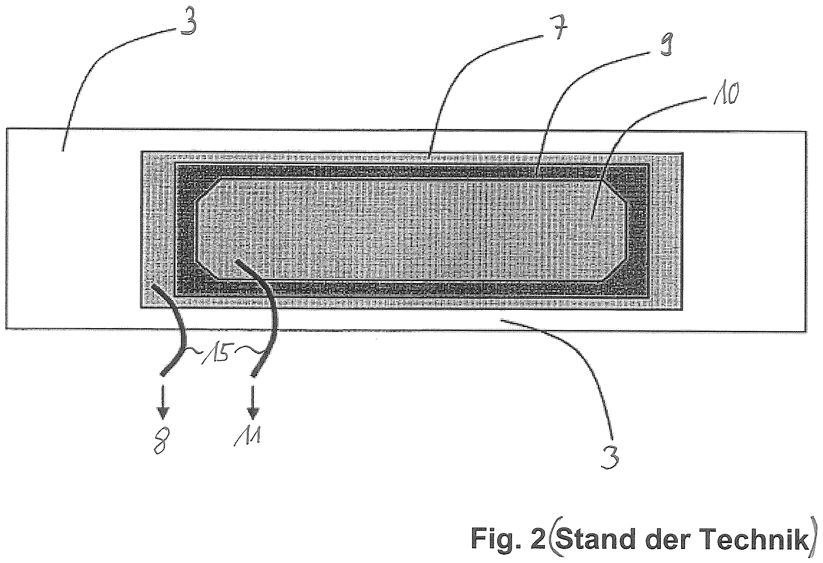

Fig. 2 zeigt eine detaillierte Seitenansicht des akustooptischen Kristalls 3. Man erkennt, wie verschiedene Schichten auf der Kristallseite aufgebracht sind. Die unterste auf dem Kristall 3 aufgebrachte Lage besteht aus einer Metallschicht, die als negative Elektrode 7 dient und beispielsweise über die Elektronikplatine 2 mit dem Außenleiter 8 des die Radiofrequenz transportierenden Koaxialkabels 1 verbunden ist. Auf der untersten Metallschicht 7 folgt eine Lage 9 aus piezoelektrischem Material, oft Lithiumniobat, der wiederum eine zweite metallische Elektrode (positive Elektrode 10) folgt, die mit dem Innenleiter 11 des Koaxialkabels 1 verbunden ist. Bei Einspeisen der Radiofrequenz auf die beiden Elektroden 7, 10 entsteht ein elektrisches Wechselfeld zwischen den beiden Elektroden 7, 10, welches das dazwischen liegende Piezoelement 9 zum Schwingen bringt, so dass sich von hier aus eine akustische Welle ins Innere des Kristalls 3 ausbreiten kann. Diese akustische Welle wird meist von der gegenüberliegenden Kristallseite weg reflektiert. Außerdem versucht man, beispielsweise durch Aufrauhen der gegenüberliegenden Kristallseite möglichst viel der Schallwelle zu absorbieren, so dass es zu möglichst wenigen störenden Reflexionen zurück ins akustooptische Wechselwirkungsgebiet kommt.

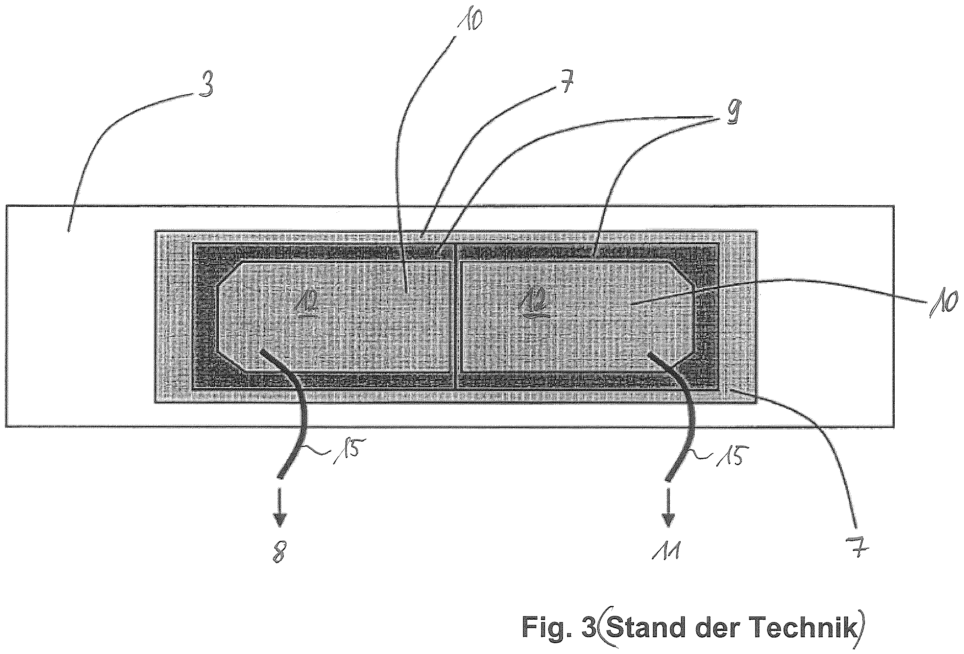

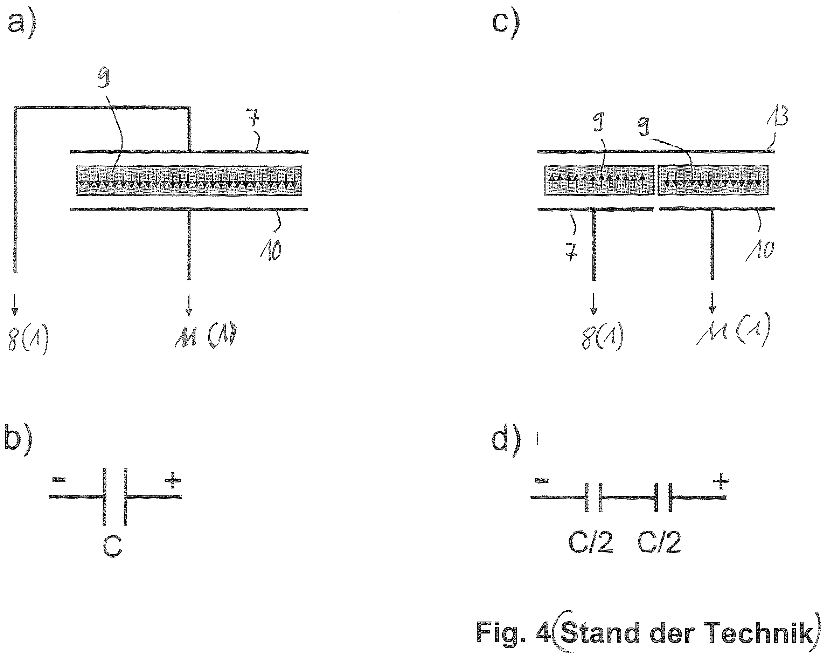

Insbesondere wenn der Wandler 4 groß ist, ist die Kapazität des aus den beiden Elektroden 7, 10 gebildeten Kondensators zu hoch für eine brauchbare Impedanzanpassung zwischen den RF-Kabel 1 und dem akustooptischen Kristall 3. In dieser Situation behilft man sich mit dem in Fig. 3 skizzierten Trick, bei dem man den Wandler 4 in zwei Teile (Wandlersegmente 12) aufspaltet, die in Reihe geschaltet sind. Hierzu ist es notwendig, das Piezoelement 9 in beiden Teilen unterschiedlich zu polen, damit die beiden Wandlersegmente 12 nicht gegeneinander arbeiten. Dies ist der Schemaansicht von Fig. 4 entnehmbar.

Fig. 4a zeigt die Beschaltung, die der Darstellung in Fig. 2 entspricht. Der Innenleiter 11 des Koaxialkabels 1 ist mit der positiven Elektrode 10 verbunden, der Außenleiter 8 mit der negativen Elektrode 7, die auf der anderen Seite des Piezomaterial 5, 9 liegt. Das zugehörige elektrische Ersatzschaubild ist in Fig. 4b gezeigt. Der Wandler 4 stellt eine Kapazität C dar, an die das elektrische Wechselfeld angelegt wird.

Fig. 4c zeigt die Schemaansicht des aufgespalteten Wandlers aus Fig. 3. Der Innenleiter 11 des Koaxialkabels 1 ist ebenfalls mit einer positiven Elektrode 10 verbunden, die jedoch nur die Hälfte der Wandler-Vorderseite umfasst. Die zugehörige Gegenelektrode 13 stellt gleichzeitig die Gegenelektrode zur negativen Elektrode 7 dar, die die andere Hälfte der Wandler-Vorderseite umfasst. Das zugehörige Ersatzschaubild ist in Fig. 4d gezeigt. Die Schaltung hat anstelle der Kapazität C die Kapazität zweier in Reihe geschalteter Kapazitäten C/2, also insgesamt nur C/4. Man erreicht durch das Aufspalten des Wandlers 4 in zwei Teile eine Reduktion der Kapazität auf ein Viertel, wobei gleichzeitig die Größe der das Schallfeld erzeugenden Fläche erhalten bleibt. Es ist jedoch zu beachten, dass die Piezoschichten der beiden Wandlerhälften umgekehrt gepolt sind, da sie sonst gegeneinander arbeiten würden und das entstehende Schallfeld dann nicht dem des nicht aufgespaltenen Wandlers 4 entspräche.

Die Ausführung des Wandlers 4, insbesondere seine Größe und Form, bestimmt letztendlich, wie das akustische Feld im Inneren des Kristalls 3 aussieht und damit die optischen Eigenschaften des beschalteten Kristalls 3. Insbesondere ist bekannt, dass bei akustooptisch durchstimmbaren Filtern (acousto optical tunable filters, AOTF) der spektrale Verlauf des abgelenkten Lichts im Wesentlichen durch die Fouriertansformierte der Wandlerform bestimmt ist. D.h. beispielsweise, dass breite Wandler eine schärfere spektrale Transmissionsfunktion besitzen als schmale, dass nämlich ein AOTF mit breitem Wandler aus dem einfallenden Licht einen spektral engeren Bereich als ein AOTF mit schmalerem Wandler ausschneidet, also eine höhere spektrale Auflösung besitzt. Umgekehrt hat ein AOTF mit schmalem Wandler eine höhere spektrale Bandbreite und lenkt daher mehr spektrale Anteile des einfallenden Lichts ab.

Während in der Vergangenheit akustooptische Bauteile, vor allem AOTFs, eingesetzt wurden, Lichtintensitäten einzustellen und zu regeln, gibt es nun eine immer stärker werdende Tendenz, diese Bauteile dazu einzusetzen, aus einem mehr oder weniger spektral breitbandigen Licht bestimmte Anteile auszuschneiden (siehe z.B. unsere DE 101 154 488 A1).

Eine solche Verwendung findet das akustooptische Bauteil vor allem beim Ausschneiden bestimmter spektraler Anteile einer kontinuierlichen oder breitbandigen Lichtquelle zu Beleuchtungszwecken (Weißlichtlaser, Breitbandlaser, Ultrakurzpulslaser, Superluminiszenz-LED oder andere Superluminiszenzlichtquellen, ASE-Lichtanteile zu Detektionszwecken, programmierbare spektrale Filter, etc.). Auch die Anwendung des akustooptischen Elements als Bauteil innerhalb eines programmierbaren Strahlteilers (AOBS) ist von Bedeutung.

Allerdings werden mit den derzeit verfügbaren akustooptischen Bauteilen und insbesondere AOTFs durch Auswahl eines bestimmten Wandlerdesigns die optischen Eigenschaften des Bauteils und insbesondere des AOTFs unveränderbar festgelegt. Eine nachträgliche Änderung, z.B. der spektralen Bandbreite eines AOTFs ist nicht möglich. Dies wird aber immer wünschenswerter, insbesondere dann, wenn das Bauteil zum Ausschneiden bestimmter spektraler Anteile des einfallenden Lichts eingesetzt werden soll, da die geforderten Eigenschaften des Bauteils sehr schnell variieren können.

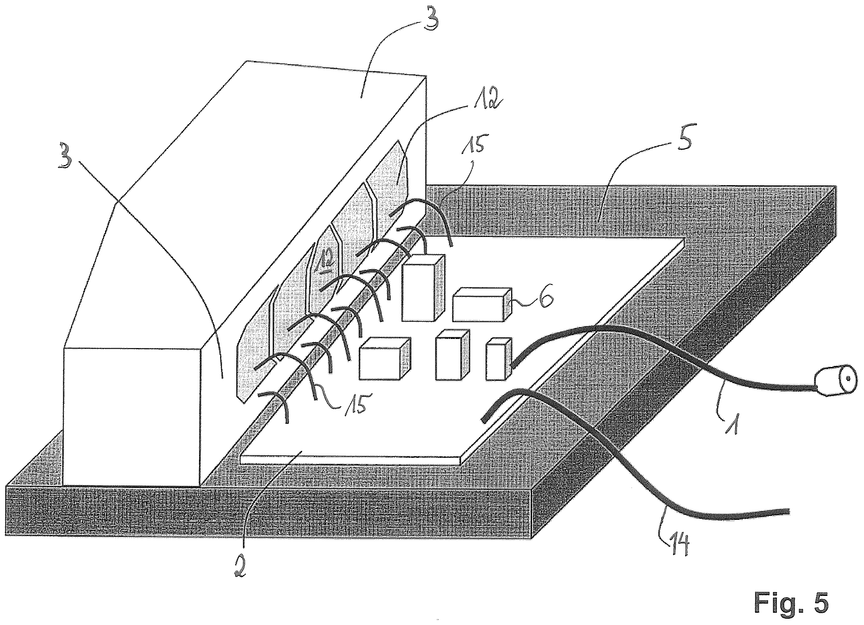

Fig. 5 zeigt den Kerngedanken der Erfindung. Um die Eigenschaften des akustooptischen Bauteils schnell variieren zu können, wird ein Wandler 4 eingesetzt, der aus mehreren Wandlersegmenten 12 besteht, die auf verschiedene Weisen beschaltbar sind. Beispielsweise kann man allein das mittlere Wandlersegment 12 des Wandlers 4 beschalten, so dass eine räumlich relativ begrenzte akustische Welle entsteht. Wenn das akustooptische Bauteil ein AOTF ist, führt dies zu einer hohen spektralen Breite. Will man die spektrale Breite einengen oder entsprechend den Bereich der akustischen Welle vergrößern, schaltet man paarweise die weiter außen liegenden Wandlersegmente 12 hinzu. Dadurch erhöht man die spektrale Auflösung des AOTF bis schließlich alle Wandlersegmente 12 beschaltet sind. Eine symmetrische Ausformung der Wandlersegmente 12 ist nicht unbedingt notwendig, genauso wenig das paarweise Hinzuschalten der weiteren Wandlersegmente 12, jedoch ist dies vorteilhaft.

Auch die Form und Anordnung der einzelnen Wandlersegmente 12 lassen einen hohen Gestaltungsspielraum zu. Wichtig ist, dass durch unterschiedliche Beschaltung die akustische Welle im Kristall 3 verschieden formbar ist, so dass sich die optischen Eigenschaften des Bauteils verändern lassen. Neben der spektralen Breite des abgelenkten Lichts bei AOTFs lässt sich auf diese Art die gesamte spektrale Durchlassfunktion sowohl für das abgelenkte Licht als auch für das unbeeinflusste Licht durch Verwendung geeigneter getrennt ansteuerbarer Wandlersegmente 12 variieren. Insbesondere lässt sich auch die Form der Durchlassfunktion ändern.

Die Ansteuerung der verschiedenen Wandlersegmente 12 lässt sich auf verschiedene Weise realisieren. Fig. 5 zeigt eine Anordnung, bei der nur ein einziges Koaxialkabel 1 die Radiofrequenz zur Elektronikplatine 2 führt. Die Elektronikplatine 2 sorgt für die Verteilung der Radiofrequenzen auf die verschiedenen Wandlersegmente 12 und passt die entsprechenden Leistungen an die Form und Größe der einzelnen Wandlersegmente 12 an. Die für das unterschiedliche Beschalten der einzelnen Wandlersegmente 12 notwendigen Informationen werden auf die Elektronikplatine 2 durch ein Steuerkabel 14 übertragen, welches vorteilhaft eine Stromversorgung für die aktive Elektronik oder für einen Mikroprozessor mit sich führt. Die Elektronikplatine 2 schaltet je nach den Erfordernissen einzelne Wandlersegmente 12 an oder ab oder varriert die anliegende Leistung.

In vorteilhafter Weise hat die Elektronikplatine 2 auch einen beschreibbaren oder lesbaren Speicherbereich, auf dem Informationen ablegbar sind, die beispielsweise für die Beschaltung oder die Kalibrierung benutzt werden können.

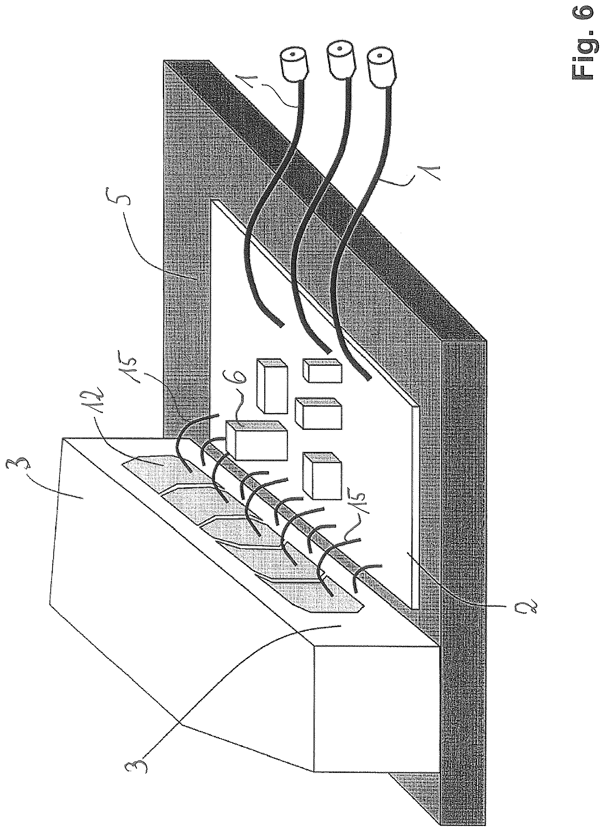

Fig. 6 zeigt einen weiteren möglichen Aufbau eines akustooptischen Bauteils, wobei hier die Variation der Beschaltung auf der Seite der Radiofrequenzerzeugung stattfindet oder zumindest nicht in der unmittelbaren Nähe des akustooptischen Kristalls 3 erfolgt. In diesem Fall führen mehrere Radiofrequenzkabel (Koaxialkabel) zur Elektroplatine 2, die jeweils unterschiedlichen Wandlersegmente 12 zugeordnet sind. Auch Mischformen der Ausführungen aus den Fig. 5 und 6 sind denkbar und von Vorteil.

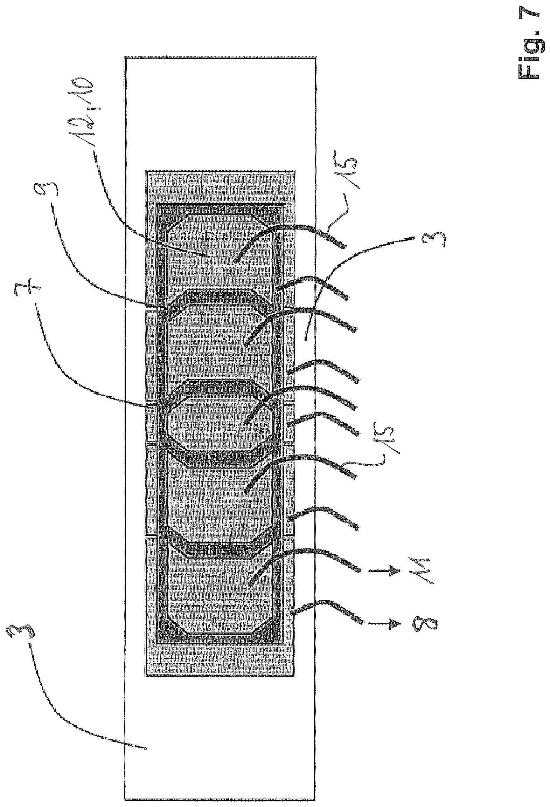

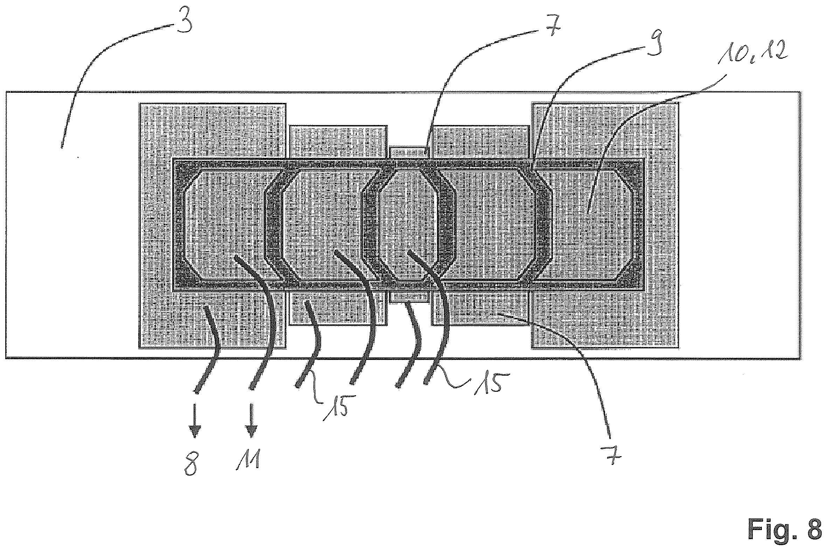

Die Fig. 7 und 8 zeigen unterschiedliche Ausführungsformen von Wandlern 4, wobei zu beachten ist, dass bezüglich Form, Größe und Anordnung der einzelnen Wandlersegmente 12 große Freiheiten bestehen. Zu beachten ist insbesondere, dass die Größe und Form der einzelnen Elektroden und Piezoschichten unabhängig voneinander an die optischen Erfordernisse und Impedanzanforderungen anpassbar sind. Bei der Ausführungsform nach Fig. 8 erfolgt die Impedanzanpassung durch alleiniges Anpassen der Größe der negativen, kristallseitigen Elektroden 7. Auch die elektronischen Bauteile 6 auf der Elektronikplatine 2 sind auf die entsprechende Impedanzsituation angepasst.

Des Weiteren ist darauf hinzuweisen, dass im Zusammenhang mit dem schaltbaren Wandler 4 das Prinzip der gespalteten Wandler 4 zur Impedanzanpassung (wie in den Fig. 3 und 4) realisierbar ist, wobei Teile des Piezomaterials invers gepolt sein müssen. In vorteilhafter Weise ordnet man die Wandlersegmente 12 so an, dass man möglichst wenig unterschiedlich gepolte Bereiche des Piezomaterials benötigt, da die unterschiedlichen Bereiche des Piezomaterials unabhängig voneinander auf dem Kristall 3 anzubringen sind, was mit erhöhtem Aufwand verbunden ist.

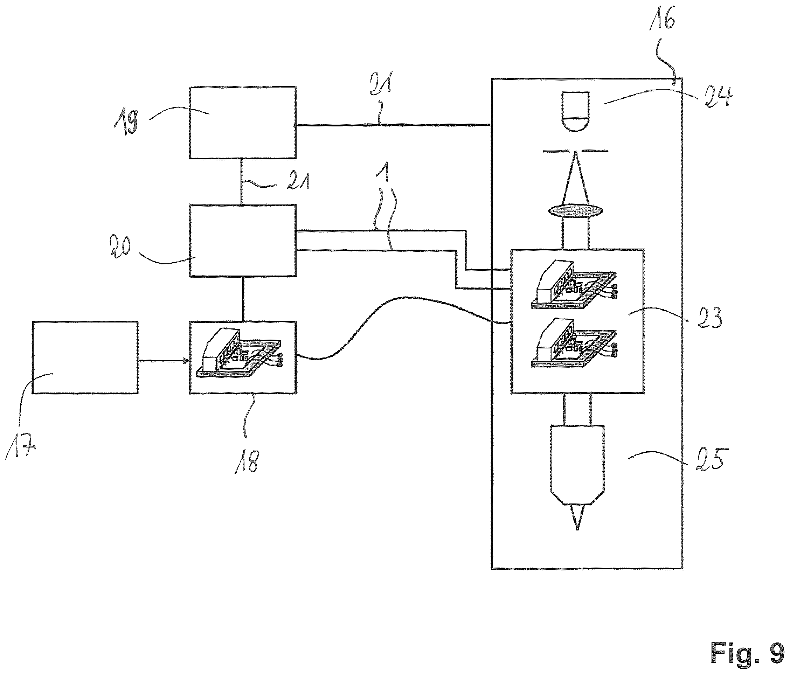

Fig. 9 skizziert den Einsatz des erfindungsgemäßen Bauteils in einem konfokalen Laserscanmikroskop 16.

Aus einer spektral zumindest in gewissen Bereichen kontinuierlichen Lichtquelle 17 (Weißlichtlaser o.ö.) werden mit einem ersten erfindungsgemäßen akustooptischen Bauteil, vorzugsweise einem AOTF 18, ein oder mehrere spektrale Anteile ausgeschnitten und zu Beleuchtungszwecken eingesetzt. Die Steuereinheit 19 des Laserscanmikroskops 16 steuert neben dem Mikroskop auch eine oder mehrere RF-Erzeugungseinheiten 20 an, die die akustooptischen Bauteile mit den notwendigen Radiofrequenzen versorgen und gegebenenfalls auch über Steuerleitungen 21 die Beschaltung der einzelnen Wandlersegmente 12 kontrollieren. Das im akustooptischen Bauteil AOTF 18 abgelenkte und dadurch selektierte Licht wird vorzugsweise über einen Lichtleiter 22 zum Scankopf des Laserscanmikroskops 16 geleitet, wo es zur Beleuchtung dient.

Besonders vorteilhaft wird das Licht über eine optische Welle, d.h. über einen akustooptischen Strahlteiler 23 (AOBS), in das Mikroskop eingekoppelt, wobei das Mikroskop einen Detektor 24 und ein Objektiv 25 umfasst. Die optische Weiche beinhaltet erfindungsgemäße akustooptische Elemente, die entsprechend über die Radiofrequenz-Erzeugungseinheit 20 angesteuert und kontrolliert werden.

Hinsichtlich weiterer vorteilhafter Ausgestaltungen des erfindungsgemäßen Bauteils wird zur Vermeidung von Wiederholungen auf den allgemeinen Teil der Beschreibung sowie auf die beigefügten Patentansprüche verwiesen.

Schließlich sei angemerkt, dass die voranstehend erörterten Ausführungsbeispiele lediglich der beispielhaften Erläuterung des erfindungsgemäßen Bauteils dienen, diese jedoch nicht auf die Ausführungsbeispiele einschränken.

## Patentansprüche

1. Akustooptisches Bauteil, insbesondere zum Einsatz im Strahlengang einer optischen Anordnung, vorzugsweise eines Mikroskops, mit einem Kristall (3) zum Durchtritt von Licht, wobei über einen elektrischen Wandler (4) Schallwellen erzeugt und durch den Kristall (3) hindurch geleitet werden und wobei die den Kristall (3) durchlaufenden Schallwellen die optischen Eigenschaften des Kristalls (3) und somit das durch den Kristall (3) hindurch tretende Licht beeinflussen, wobei
zur variablen Beeinflussung des durch den Kristall (3) hindurch tretenden Lichts die den Kristall (3) durchlaufenden Schallwellen bzw. das akustische Feld im Kristall (3) veränderbar sind/ist, wobei
die Veränderung der Schallwellen bzw. des akustischen Feldes im Kristall (3) durch Ansteuern und/oder Beschalten des Wandlers (4) erfolgt, wobei der Wandler (4) aus mehreren einzelnen, voneinander unabhängigen Wandlersegmenten (12) besteht, und wobei der elektrische Wandler (4) eine kristallseitige Elektrode aufweist, die aus mehreren einzelnen Segmenten (7) besteht, so dass die spektrale Durchlassfunktion sowohl für abgelenktes Licht als auch für unbeeinflusstes Licht variiert werden kann, **dadurch gekennzeichnet, dass** eine Impedanzanpassung zwischen einem Radiofrequenz-Kabel und dem Kristall durch alleiniges Anpassen der Größe der einzelnen Segmente (7) der negativen, kristallseitigen Elektroden erfolgt, wobei ebenfalls elektronische Bauteile (6) auf einer Elektronikplatine (2), über die der Wandler (4) bzw. die Wandlersegmente (12) mit einer Radiofrequenz gespeist wird/werden, auf die entsprechende Impedanzsituation angepasst sind.

2. Bauteil nach Anspruch 1, **dadurch gekennzeichnet, dass** die Wandlersegmente (12) nebeneinander an, auf oder in dem Kristall (3) angeordnet sind.

3. Bauteil nach Anspruch 1 oder 2, **dadurch gekennzeichnet, dass** die Wandlersegmente (12) symmetrisch zueinander angeordnet sind.

4. Bauteil nach einem der Ansprüche 1 bis 3, **dadurch gekennzeichnet, dass** die Wandlersegmente (12) ein mittiges Segment und darum bzw. links und rechts davon symmetrisch angeordnete weitere Segmente umfassen.

5. Bauteil nach einem der Ansprüche 1 bis 4, **dadurch gekennzeichnet, dass** die Wandlersegmente (12) einzeln oder in Gruppen schaltbar bzw. aktivierbar sind.

6. Bauteil nach einem der Ansprüche 1 bis 5, **dadurch gekennzeichnet, dass** der Wandler (4) als unterste Schicht eine negative Elektrode (7), vorzugsweise aus Metall, eine auf der untersten Schicht ausgebildete mittlere Schicht aus einem Piezomaterial (9), vorzugsweise aus Lithiumniobat, und eine auf der mittleren Schicht ausgebildete obere Schicht als positive Elektrode (10), vorzugsweise aus Metall, umfasst.

7. Bauteil nach Anspruch 6, **dadurch gekennzeichnet, dass** die negative Elektrode (7) mit dem Außenleiter (8) des Koaxialkabels (1) und die positive Elektrode (10) mit dem Innenleiter (11) des Koaxialkabels (1) verbunden ist.

8. Bauteil nach Anspruch 6 oder 7, **dadurch gekennzeichnet, dass** die negative Elektrode (7) und/oder die positive Elektrode (10) und/oder das Piezomaterial (9) zur Bildung der Wandlersegmente (12) segmentiert ist/sind.

9. Bauteil nach einem der Ansprüche 1 bis 8, **dadurch gekennzeichnet, dass** der Kristall (3) mit dem Wandler (4) auf einer Befestigungsplatte (5) und dort wiederum nahe oder auf einer Elektronikplatine (2) angeordnet ist, über die der Wandler (4) bzw. die Wandlersegmente (12) mit einer Radiofrequenz gespeist wird/werden.

10. Bauteil nach Anspruch 9, **dadurch gekennzeichnet, dass** die Elektronikplatine (2) über ein elektrisches Kabel, vorzugsweise über ein Koaxialkabel (1), an einen Generator für Radiofrequenzen angeschlossen ist.

11. Bauteil nach Anspruch 9 oder 10, **dadurch gekennzeichnet, dass** die Elektronikplatine (2) elektronische Bausteine (6) umfasst, über die die Radiofrequenzen auf die einzelnen Wandlersegmente (12) schaltbar sind, vorzugsweise unter Zugrundelegung eines entsprechenden Steuerungssignals.

12. Bauteil nach Anspruch 11, **dadurch gekennzeichnet, dass** über die elektronischen Bausteine (6) eine Anpassung der Leistung der Radiofrequenz, insbesondere in Bezug auf die jeweilige Form und Größe der einzelnen Wandlersegmente (12), realisierbar ist.

13. Bauteil nach einem der Ansprüche 1 bis 12, **gekennzeichnet durch** die Verwendung als AOTF (acousto optical tunable filter).

14. Bauteil nach einem der Ansprüche 1 bis 13, **gekennzeichnet durch** die Verwendung als AOBS (acousto optical beam splitter).

## Claims

1. An acousto-optical component, in particular for use in the beam path of an optical arrangement, preferably of a microscope, with a crystal (3) for the passage of light, wherein sound waves are generated via an electrical transducer (4) and are passed through the crystal (3) and wherein the sound waves passing through the crystal (3) affect the optical properties of the crystal (3) and thus the light passing through the crystal (3), wherein to exert a variable influence of the light passing through the crystal (3), the sound waves passing through the crystal (3) or the acoustical field in the crystal (3) are/is changeable, wherein the change of the sound waves or of the acoustical field in the crystal (3) takes place by actuating and/or connecting of the transducer (4), wherein the transducer (4) consists of several individual, mutually independent transducer segments (12), and wherein the electrical transducer (4) has a crystal-side electrode, which consists of several individual segments (7), so that the spectral pass function can be varied both for deflected light as well as for uninfluenced light, **characterized in that** an impedance adjustment takes place between a radio frequency cable and the crystal simply by adjusting the size of the individual segments (7) of the negative crystal-side electrodes, wherein electronic components (6) are also adjusted on an electronic board (2), via which the transducer (4) or the transducer segments (12) is/are supplied with a radio frequency, for the corresponding impedance situation.

2. A component according to Claim 1, **characterized in that** the transducer segments (12) are arranged adjacently at, on or in the crystal (3).

3. A component according to Claim 1 or 2, **characterized in that** the transducer segments (12) are arranged symmetrically to one another.

4. A component according to any one of the Claims 1 to 3, **characterized in that** the transducer segments (12) comprise a central segment and further segments arranged symmetrically thereabout or to the left or right thereof.

5. A component according to any one of the Claims 1 to 4, **characterized in that** the transducer segments (12) can be connected or activated individually or in groups.

6. A component according to any one of Claims 1 to 5, **characterized in that** the transducer (4) as the lowest layer comprises a negative electrode (7), preferably made of metal, a center layer formed on the lowest layer made of a piezoelectric material (9), preferably made of lithium niobate, and an upper layer formed on the center layer as a positive electrode (10), preferably made of metal.

7. A component according to Claim 6, **characterized in that** the negative electrode (7) is connected to the outer conductor (8) of the coaxial cable (1) and the positive electrode (10) to the inner conductor (11) of the coaxial cable (1).

8. A component according to Claim 6 or 7, **characterized in that** the negative electrode (7) and/or the positive electrode (10) and/or the piezoelectric material (9) is/are segmented to form the transducer segments (12).

9. A component according to any one of the Claims 1 to 8, **characterized in that** the crystal (3) is arranged with the transducer (4) on a mounting plate (5) and there in turn close to or on an electronic board (2), via which the transducer (4) or the transducer segments (12) is/are supplied with a radio frequency.

10. A component according to Claim 9, **characterized in that** the electronic board (2) is connected to a generator for radio frequencies via an electronic cable, preferably via a coaxial cable (1).

11. A component according to Claim 9 or 10, **characterized in that** the electronic board (2) comprises electronic building blocks (6), via which the radio frequencies can be connected to the individual transducer segments (12), preferably on the basis of a corresponding control signal.

12. A component according to Claim 11, **characterized in that** via the electronic building blocks (6) an adjustment of the power of the radio frequency, in particular in regard to the respective form and size of the individual transducer segments (12), is realizable.

13. A component according to any one of Claims 1 to 12, **characterized by** the use as AOTF (acousto optical tunable filter).

14. A component according to any one of Claims 1 to 13, **characterized by** the use as OABS (acousto optical beam splitter).

## Revendications

1. Composant acousto-optique, plus particulièrement destiné à être utilisé dans le trajet faisceaux d'un dispositif optique, de préférence d'un microscope, avec un cristal (3) pour le passage de la lumière, un convertisseur électrique (4) permettant de générer des ondes sonores qui sont guidées à travers le cristal (3) et les ondes sonores traversant le cristal (3) influençant les propriétés optiques du cristal (3) et donc la lumière traversant le cristal (3),
pour une influence variable de la lumière traversant le cristal (3), les ondes sonores traversant le cristal (3) ou le champ acoustique dans le cristal (3) sont/est variable(s),
la modification des ondes sonores ou du champ acoustique dans le cristal (3) ayant lieu par le contrôle et/ou la commutation du convertisseur (4), le convertisseur (4) étant constitué de plusieurs segments de convertisseur (12) individuels indépendants entre eux et le convertisseur électrique (4) comprenant une électrode côté cristal, qui est constituée de plusieurs segments individuels (7), de façon à ce que la fonction de transparence spectrale puisse être modifiée aussi bien pour la lumière déviée que pour la lumière non influencée,
**caractérisé en ce qu'**une adaptation d'impédance a lieu entre un câble de fréquence radio et le cristal par une adaptation unique de la taille des segments individuels (7) des électrodes négatives côté cristal, des composants électroniques (6) sur une platine électronique (2), par l'intermédiaire desquels le convertisseur (4) ou les segments de convertisseur (12) est/sont alimenté(s), étant également adaptés à la situation d'impédance correspondante.

2. Composant selon la revendication 1, **caractérisé en ce que** les segments de convertisseur (12) sont disposés les uns à côté des autres au niveau, sur ou dans le cristal (3).

3. Composant selon la revendication 1 ou 2, **caractérisé en ce que** les segments de convertisseur (12) sont disposés symétriquement entre eux.

4. Composant selon l'une des revendications 1 à 3, **caractérisé en ce que** les segments de convertisseur (12) comprennent un segment central et d'autres segments disposés de manière symétrique autour ou à gauche et à droite de celui-ci.

5. Composant selon l'une des revendications 1 à 4, **caractérisé en ce que** les segments de convertisseur (12) peuvent être commutés ou activés individuellement ou par groupes.

6. Composant selon l'une des revendications 1 à 5, **caractérisé en ce que** le convertisseur (4) comprend, en tant que couche inférieure, une électrode négative (7), de préférence en métal, une couche centrale réalisée sur la couche inférieure, en matériau piézoélectrique (9), de préférence en niobate de lithium, et une couche supérieure, réalisée sur la couche centrale, en tant qu'électrode positive (10), de préférence en métal.

7. Composant selon la revendication 6, **caractérisé en ce que** l'électrode négative (7) est reliée avec le conducteur externe (8) du câble coaxial (1) et l'électrode positive (10) est reliée avec le conducteur interne (11) du câble coaxial (1).

8. Composant selon la revendication 6 ou 7, **caractérisé en ce que** l'électrode négative (7) et/ou l'électrode positive (10) et/ou le matériau piézoélectrique (9) est/sont segmentée(s) pour la formation des segments de convertisseur (12).

9. Composant selon l'une des revendications 1 à 8, **caractérisé en ce que** le cristal (3) est disposé, avec le convertisseur (4), sur une plaque de fixation (5) et près ou sur une platine électronique (2), par l'intermédiaire de laquelle le convertisseur (4) ou les segments de convertisseur (12) est/sont alimenté(s) avec une fréquence radio.

10. Composant selon la revendication 9, **caractérisé en ce que** la platine électronique (2) est raccordée à un générateur de fréquences radio par l'intermédiaire d'un câble électrique, de préférence par l'intermédiaire d'un câble coaxial (1).

11. Composant selon la revendication 9 ou 10, **caractérisé en ce que** la platine électronique (2) comprend des composants électroniques (6), par l'intermédiaire desquels les fréquences radio peuvent être commutées sur les différents segments de convertisseur (12), de préférence à l'aide d'un signal de commande correspondant.

12. Composant selon la revendication 11, **caractérisé en ce que** les composants électroniques (6) permettent une adaptation de la puissance de la fréquence radio, plus particulièrement en fonction de la forme et de la taille des différents segments de convertisseur (12).

13. Composant selon l'une des revendications 1 à 12, **caractérisé par** une utilisation en tant que AOTF (acousto optical tunable filter).

14. Composant selon l'une des revendications 1 à 13, **caractérisé par** une utilisation en tant que AOBS (acousto optical beam splitter).
